# EUROPÄISCHE PATENTSCHRIFT

(11) **EP 1 274 156 B1**
(45) Veröffentlichungstag und Bekanntmachung des Hinweises auf die Patenterteilung: **28.09.2005**
(21) Anmeldenummer: 01116349.0
(22) Anmeldetag: 05.07.2001
(51) Int. Cl.: H01S 3/03, H01S 3/097

(54) **Gaslaser**
Gas laser
Laser à gaz

(43) Veröffentlichungstag der Anmeldung: 08.01.2003
(73) Patentinhaber: Tuilaser AG, 82110 Germering (DE)
(72) Erfinder: Strowitzki, Claus, 82205 Gilching (DE)
(74) Vertreter: Hofstetter, Alfons J.

(56) Entgegenhaltungen:
- EP-A- 1 085 623
- US-A- 4 612 642
- US-A- 4 686 682
- US-A- 5 081 638
- PATENT ABSTRACTS OF JAPAN vol. 1996, no. 01, 31. Januar 1996 (1996-01-31) -& JP 07 240556 A (TOSHIBA CORP), 12. September 1995 (1995-09-12)
- PATENT ABSTRACTS OF JAPAN vol. 009, no. 115 (E-315), 18. Mai 1985 (1985-05-18) & JP 60 004280 A (MITSUBISHI DENKI KK), 10. Januar 1985 (1985-01-10)
- PATENT ABSTRACTS OF JAPAN vol. 2000, no. 20, 10. Juli 2001 (2001-07-10) -& JP 2001 060733 A (NIDEK CO LTD), 6. März 2001 (2001-03-06)

## Beschreibung

Die vorliegende Erfindung bezieht sich auf einen Gaslaser mit einer Hochspannungselektrode und einer Masseelektrode, wobei die Hochspannungselektrode und die Masseelektrode derart zueinander angeordnet sind, daß zwischen ihnen ein Entladungsspalt ausgebildet wird und mit einer Vorrichtung zur Erzeugung von Hochspannung mit einem Schaltkreis mit mindestens einem Speicherkondensator und mindestens einem Sekundärkondensator, wobei der Sekundärkondensator innerhalb einer mit Lasergas gefüllten Entladungskammer im Bereich der Hochspannungselektrode angeordnet ist.

Derartige Gaslaser sind zum Beispiel aus der JP 07 240 556 A bekannt. Zudem wird in dem Prospekt der Firma Questek Inc. aus dem Jahre 1986 ein Excimer-Laser der Serie 2000 beschrieben, bei dem die Sekundärkondensatoren, auch Peaking-Kondensatoren genannt, im Lasergas in unmittelbarer Nähe der Elektroden angeordnet werden können. Diese räumliche Nähe ist nützlich, um eine möglichst niederinduktive Verbindung zwischen der Hochspannungselektrode und den Sekundärkondensatoren zu erhalten. Bei einem derartigen Aufbau ist es nicht mehr notwendig, die Durchführungen der Hochspannung in die Laserröhre niederinduktiv aufzubauen. Der Aufbau des Gaslasers kann infolge dessen einfacher und billiger durchgeführt werden. Zudem steigt durch die niedrige Induktivität die Effizienz des Gaslasers. Außerdem sinkt die Fluktuation der Pulsenergie, was zu einer verbesserten Energiestabilität führt. Trotz der genannten Vorteile dieses bekannten Gaslasers wurde diese vorbekannte Konstruktion wieder verworfen, da sie erhebliche Nachteile hinsichtlich der Bauteil- und Gaslebensdauer aufgewiesen hat. So wird in dem oben genannten Prospekt der Firma Questek Inc. die vorteilhafte Anordnung der Sekundärkondensatoren außerhalb der Entladungskammer beschrieben.

Des weiteren ist die Bedeutung des Strömungskanals für das Lasergas für die Qualität der Entladung und die Höhe der Repetitionsrate bekannt. Hohe Strömungsgeschwindigkeiten und eine möglichst laminare Strömung des Lasergases steigern die Effizienz und die Energiestabilität des Gaslasers, da es zu einem schnellen Austausch des Lasergases zwischen den Elektroden in der Zeit zwischen zwei Entladungen kommt. So beschreibt das Patent US-A-5 771 258 ein strömungsoptimiertes Design, bei dem die Form einer Venturidüse mit einem Öffnungswinkel von ca. 30° eingesetzt wird. Damit läßt sich die Strömungsgeschwindigkeit des Lasergases signifikant erhöhen, wodurch die Zeit zwischen den einzelnen Entladungen gesenkt wird und somit höhere Repetitionsraten erreicht werden können.

Des weiteren beschreibt die DE 37 16 873 A1 einen Gaslaser, der zur Erhöhung seiner Leistung so ausgebildet ist, daß im Gasentladungsraum eine kontinuierliche Gasströmung vorhanden ist, die mit entsprechenden zusätzlichen Reflektoren optimiert werden soll. Aus der US-A-4 612 642 ist die Verwendung eines Sekundärkondensators aus keramik bekannt.

Nachteilig an diesen vorbekannten Konstruktionen ist jedoch, daß diese einen hohen konstruktiven Aufwand erfordern und zudem durch den Einsatz zusätzlicher Bauteile die entsprechenden bekannten Gaslaser nicht kleindimensioniert ausgebildet werden können.

Es ist daher Aufgabe der vorliegenden Erfindung, einen gattungsgemäßen Gaslaser bereitzüstellen, der die genannten Nachteile der bekannten Gaslaser überwindet und eine geringe Kopfinduktivität, eine gesteigerte Effizienz und verbesserte Energiestabilität sowie eine verlängerte Lebensdauer der Bauteile und des Lasergases bei einem gleichzeitigen einfachen und kleindimensionierten Aufbau gewährleistet.

Gelöst wird diese Aufgabe durch einen gattungsgemäßen Gaslaser mit den Merkmalen des Anspruches 1.

Vorteilhafte Ausgestaltungen sind in den Unteransprüchen beschrieben.

Bei einem erfindungsgemäßen Gaslaser weist der Sekundärkondensator bzw. Peaking-Kondensator mindestens eine in Richtung einer Hochspannungselektrode ausgerichtete und aus einem gegenüber dem Lasergas inerten Material bestehende Außenfläche auf, wobei die Außenfläche mindestens eine Begrenzungsfläche eines Strömungskanals für das Lasergas ausbildet. Durch die an sich bekannte Anordnung des Sekundärkondensators innerhalb einer mit dem Lasergas gefüllten Entladungskammer im Bereich der Hochspannungselektrode ist einerseits gewährleistet, daß der gesamte Aufbau des Gaslasers einfacher und billiger ausgeführt werden kann, wobei gleichzeitig durch die niedrigere Induktivität die Effizienz des Lasers steigt und die Fluktuation der Pulsenergie sinkt. Durch die erfindungsgemäße Verwendung mindestens einer in Richtung der Hochspannungselektrode ausgerichteten Außenfläche des Sekundärkondenstators als strömungsleitendes Element ist zudem gewährleistet, daß der Gaslaser sehr klein dimensioniert ausgebildet sein kann, da auf zusätzliche strömungsleitende Elemente wie z.B. Reflektoren oder Leitbleche innerhalb der Entladungskammer verzichtet werden kann. Zudem erhöht sich die Lebensdauer der einzelnen Bauteile, insbesondere der Sekundärkondensatoren und auch des vorbeiströmenden Lasergases dadurch, daß die Außenflächen der Sekundärkondensatoren aus einem gegenüber dem Lasergas inerten Material bestehen. So können die Außenflächen aus BaTiO3 oder SrTiO3 bestehen.

In einer vorteilhaften Ausgestaltung des erfindungsgemäßen Gaslasers sind mehrere Sekundärkondensatoren nebeneinander angeordnet und bilden eine Kondensatorbank aus, wobei die Achse der Kondensatorbank parallel zur Achse der Hochspannungselektrode verläuft. Damit ist eine gleichmäßige Strömungslenkung über die gesamte Breite der Entladung entlang der Hochspannungselektrode gewährleistet.

In einer weiteren vorteilhaften Ausgestaltung des erfindungsgemäßen Gaslasers sind zwei Sekundärkondensatoren oder zwei Kondensatorbänke in Strömungsrichtung des Lasergases parallel zur Hochspannungselektrode angeordnet, derart, daß die Hochspannungselektrode zwischen den Außenflächen der jeweiligen Sekundärkondensatoren oder Kondensatorbänken zu liegen kommt. Eine derartigen Anordnung der Sekundärkondensatoren gewährleistet einen exakt definierten Strömungskanal entlang der Längsachse der Hochspannungselektrode, so daß wiederum eine gleichmäßige Strömungslenkung über die gesamte Breite der Entladung ermöglicht wird und die Gasfluktuationen zwischen den einzelnen Entladungen auf ein Minimum reduziert werden.

In einer weiteren vorteilhaften Ausgestaltung der Erfindung ist der Sekundärkondensator bzw. die Kondensatorbank quader- oder blockförmig oder auch schichtförmig ausgebildet. Dies dient zur Optimierung der Strömungslenkung des Lasergases.

In einer weiteren vorteilhaften Ausgestaltung der Erfindung sind mindestens zwei Sekundärkondensatoren nebeneinander und voneinander beabstandet in einer Kondensatorbank angeordnet, derart, daß zwischen den einzelnen Sekundärkondensatoren Zwischenräume entstehen, wobei die Zwischenräume aus Elementen aus inerten Material verschlossen sind. Die genannten Elemente können dabei aus Keramik bestehen. Dadurch ist es möglich, daß ohne Berücksichtigung der Größe der Sekundärkondensatoren ein kompletter Strömungskanal für das Lasergas zur Verfügung gestellt wird.

In einer weiteren vorteilhaften Ausgestaltung des erfindungsgemäßen Gaslasers weist der Gaslaser mindestens eine Vorrichtung zur Beschleunigung der Zirkulation des Lasergases auf. Durch die Erhöhung der Strömungsgeschwindigkeit des Lasergases kann die Entladungsrate bzw. Pulsrate des Gaslasers signifikant erhöht werden.

In einer weiteren vorteilhaften Ausgestaltung der Erfindung ist zwischen der Hochspannungselektrode und mindestens einem Sekundärkondensator bzw. mindestens einer Kondensatorbank mindestens ein ein- oder zweiseeliger Koronastab angeordnet. Dadurch ist vorteilhafterweise eine Vorionisierung des Lasergases gewährleistet. Die Seele der Koronastäbe bzw. -röhren kann dabei auf Masse liegen, wenn die Koronaröhren in der Nähe der Hochspannungselektrode angeordnet sind. Sie können aber auch mit Hochspannung beaufschlagt sein, wenn die Koronastäbe in der Nähe der Masse oder einem geringeren Spannungspotential angeordnet sind.

Die erfindungsgemäße Ausgestaltung des Gaslasers eignet sich für alle Gasentladungslaser, insbesondere für solche mit transversaler Durchströmung der Entladungszone. Dabei kann es sich insbesondere um Excimer-Laser handeln, bei denen das aktive Lasergas z.B. XeCI, KrF, ArF oder F₂ ist.

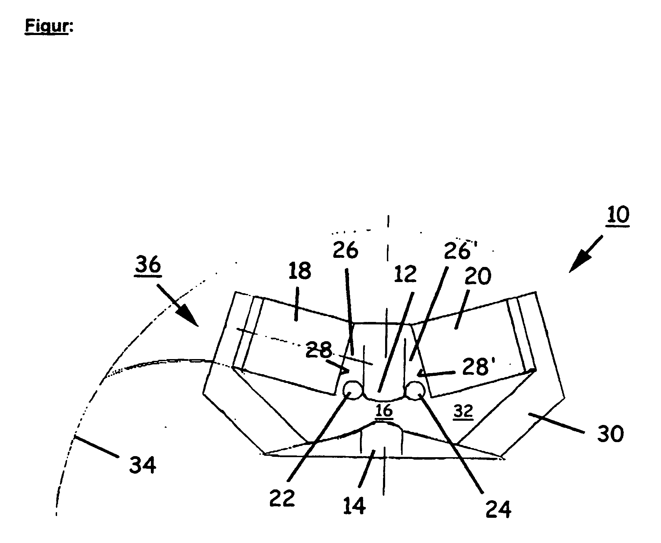

Weitere Aufgaben, Vorteile und Merkmale der vorliegenden Erfindung ergeben sich aus dem folgenden, in der Figur dargestellten Ausführungsbeispiels.

Die Figur zeigt in einer schematischen Darstellung einen Gaslaser 10 mit einer Hochspannungselektrode 12 und einer Masseelektrode 14. Die Hochspannungselektrode 12 und die Masseelektrode 14 sind dabei derart zueinander angeordnet, daß zwischen ihnen ein Entladungsspalt 16 ausgebildet wird. Des weiteren weist der Gaslaser eine Vorrichtung zur Erzeugung von Hochspannung mit einem Schaltkreis mit mindesten einem Speicherkondensator (nicht dargestellt) und zwei Sekundärkondensatoren 18, 20 auf. Man erkennt, daß in dem gezeigten Ausführungsbeispiel die sich gegenüberliegenden Sekundärkondensatoren 18, 20 innerhalb einer mit Lasergas gefüllten Entladungskammer 32 im Bereich bzw. in der Nähe der Hochspannungselektrode 12 angeordnet sind. Dabei weisen die Sekundärkondensatoren 18, 20 jeweils eine in Richtung der Hochspannungselektrode 12 ausgerichtete Außenfläche 28, 28' auf, die jeweils eine Begrenzungsfläche der Strömungskanäle 26, 26' für das Lasergas ausbilden. Die Außenflächen 28, 28' der Sekundärkondensatoren 18, 20 bestehen dabei aus einem gegenüber dem Lasergas inerten Material wie z.B. BaTiO₃ oder SrTiO₃. Neben den Außenflächen 28, 28' können auch die übrigen Elemente der Sekundärkondensatoren 18, 20 aus BaTiO₃ oder SrTiO₃ bestehen.

Die Sekundärkondensatoren 18, 20 bilden in dem Ausführungsbeispiel zwei Kondensatorbänke, die in Strömungsrichtung des Lasergases parallel zur Hochspannungselektrode 12 angeordnet sind. Dabei kommt die Hochspannungselektrode 12 zwischen den Außenflächen 28, 28' der Kondensatorbänke zu liegen. Die Sekundärkondensatoren 18, 20 sind quaderförmig ausgebildet. Es ist aber auch möglich diese blockförmig oder schichtförmig auszubilden. Entscheidend ist lediglich, daß eine der Außenflächen der oder des Sekundärkondensators in Richtung der Hochspannungselektrode 12 zeigt und so eine Begrenzungsfläche eines entsprechenden Strömungskanals ausbildet.

Eine der Außenfläche 28' gegenüberliegende Fläche des Sekundärkondensators 20 ist mit einem Masserückleiter 30 verbunden, der wiederum masseleitend mit der Masseelektrode 14 verbunden ist.

Die Figur zeigt weiterhin, daß zwischen der Hochspannungselektrode 12 und den Sekundärkondensatoren 18, 20 jeweils ein Koronastab 22, 24 angeordnet ist. Diese dienen zur Vorionisierung des Lasergases. Die Koronastäbe 22, 24 können dabei mit einer oder zwei leitenden Seelen ausgestattet sein.

Die vorgenannten Elemente des Gaslasers 10 sind innerhalb einer Entladungseinheit 36 angeordnet. Die Entladungseinheit 36 kann dabei modular aufgebaut sein, so daß ein leichter Austausch, z.B. bei der Wartung einzelner Bauelemente ermöglicht wird. Die Entladungseinheit 36 ist dabei innerhalb eines röhrenartigen Gehäuses 34 angeordnet.

## Patentansprüche

1. Gaslaser mit einer Hochspannungselektrode (12) und einer Masseelektrode (14), wobei die Hochspannungselektrode (12) und die Masseelektrode (14) derart zueinander angeordnet sind, dass zwischen ihnen ein Entladungsspalt (16) ausgebildet wird und einer Vorrichtung zur Erzeugung von Hochspannung mit einem Schaltkreis mit mindestens einem Speicherkondensator und mindestens einem Sekundärkondensator (18, 20), wobei der Sekundärkondensator (18, 20) innerhalb einer mit Lasergas gefüllten Entladungskammer (32) im Bereich der Hochspannungselektrode (12) angeordnet ist, wobei der Sekundärkondensator (18, 20) mindestens eine in Richtung der Hochspannungselektrode (12) ausgerichtete Außenfläche (28, 28'), derart, dass wenigstens eine Flächennormale der Außenfläche (28, 28') auf die Hochspannungselektrode (12) zeigt, aufweist und die Außenfläche (28, 28') mindestens eine Begrenzungsfläche eines Strömungskanals (26, 26') für das zirkulierende Lasergas ausbildet und somit die Strömung des Lasergases räumlich begrenzt und leitet, wobei das Lasergas die Entladungstone transversal durchströmt,
**dadurch gekennzeichnet,**
**dass** zumindest die Außenfläche (28, 28') des Sekundärkondensators (18, 20) aus einem gegenüber dem Lasergas inerten Material besteht.

2. Gaslaser nach Anspruch 1,
**dadurch gekennzeichnet,**
**daß** mehrere Sekundärkondensatoren (18, 20) nebeneinander angeordnet sind und eine Kondensatorbank ausbilden, wobei die Achse der Kondensatorbank parallel zur Achse der Hochspannungselektrode (12) verläuft.

3. Gaslaser nach Anspruch 1 oder 2,
**dadurch gekennzeichnet,**
**daß** zwei Sekundärkondensatoren (18, 20) oder zwei Kondensatorbänke in Strömungsrichtung des Lasergases parallel zur Hochspannungselektrode (12) angeordnet sind, derart, dass die Hochspannungselektrode (12) zwischen den Außenflächen (28, 28') der jeweiligen Sekundärkondensatoren oder Kondensatorbänke zu liegen kommt.

4. Gaslaser nach einem der vorhergehenden Ansprüche,
**dadurch gekennzeichnet,**
**daß** der Sekundärkondensator (18, 20) quader- oder blockförmig oder schichtförmig ausgebildet ist.

5. Gaslaser nach Anspruch 1,
**dadurch gekennzeichnet,**
**daß** die Außenflächen (28, 28') aus BaTiO₃ oder SrTiO₃ bestehen.

6. Gaslaser nach einem der vorhergehenden Ansprüche,
**dadurch gekennzeichnet,**
**daß** mindestens eine der Außenfläche (28, 28') gegenüberliegende Fläche des Sekundärkondensators (18, 20) mit einem Masserückleiter (30) verbunden ist.

7. Gaslaser nach einem der vorhergehenden Ansprüche,
**dadurch gekennzeichnet,**
**daß** mindestens zwei Sekundärkondensatoren nebeneinander und voneinander beabstandet in einer Kondensatorbank (18, 20) angeordnet sind, derart, daß zwischen den einzelnen Sekundärkondensatoren Zwischenräume entstehen, wobei die Zwischenräume mit Elementen aus inerten Material verschlossen sind.

8. Gaslaser nach Anspruch 7,
**dadurch gekennzeichnet,**
**daß** die Elemente aus Keramik bestehen.

9. Gaslaser nach einem der vorhergehenden Ansprüche,
**dadurch gekennzeichnet,**
**daß** der Gaslaser (10) mindestens eine Vorrichtung zur Beschleunigung der Zirkulation des Lasergases aufweist.

10. Gaslaser nach einem der vorhergehenden Ansprüche,
**dadurch gekennzeichnet,**
**daß** zwischen der Hochspannungselektrode (12) und mindestens einem Sekundärkondensator (18, 20) bzw. mindestens einer Kondensatorbank mindestens ein ein- oder zweiseeliger Koronastab (22, 24) angeordnet ist.

11. Gaslaser nach einem der vorhergehenden Ansprüche,
**dadurch gekennzeichnet,**
**daß** der Gaslaser (10) ein Excimer-Laser ist.

## Claims

1. Gas laser including a high voltage electrode (12) and a ground electrode (14), the high voltage electrode (12) and the ground electrode (14) being disposed with respect to each other such that a discharge gap (16) is formed between them, and a device for generating a high voltage, including a circuit having at least one storage capacitor and at least one secondary capacitor (18, 20), wherein the secondary capacitor (18, 20) is disposed within a discharge chamber (32) filled with laser gas in the region of the high voltage electrode (12), wherein the secondary capacitor (18, 20) has at least one outer surface (28, 28') oriented towards the high voltage electrode (12) such that at least one surface normal of the outer surface (28, 28') points to the high voltage electrode (12), and the outer surface (28, 28') forms at least one limiting surface of a flow channel (26, 26') for the circulating laser gas and thus spatially limits and directs the flow of the laser gas, wherein the laser gas transversally passes the discharge zone,
**characterized in that**
at least the outer surface (28, 28') of the secondary capacitor (18, 20) is made of a material inert to the laser gas.

2. Gas laser according to claim 1,
**characterized in that**
plural secondary capacitors (18, 20) are disposed side by side and form a capacitor bank, wherein the axis of the capacitor bank is parallel to the axis of the high voltage electrode (12).

3. Gas laser according to claim 1 or 2,
**characterized in that**
two secondary capacitors (18, 20) or two capacitor banks are disposed in the flow direction of the laser gas parallel to the high voltage electrode (12) such that the high voltage electrode (12) comes to lie between the outer surfaces (28, 28') of the respective secondary capacitors or capacitor banks.

4. Gas laser according to any one of the preceding claims,
**characterized in that**
the secondary capacitor (18, 20) is formed parallelepiped- or block-shaped or stratified.

5. Gas laser according to claim 1,
**characterized in that**
the outer surfaces (28, 28') are made of BaTiO₃ or SrTiO₃.

6. Gas laser according to any one of the preceding claims,
**characterized in that**
at least one surface of the secondary capacitor (18, 20) opposing the outer surface (28, 28') is connected to a ground return conductor (30).

7. Gas laser according to any one of the preceding claims,
**characterized in that**
at least two secondary capacitors are disposed side by side and spaced from each other in a capacitor bank (18, 20) such that clearances arise between the individual secondary capacitors, wherein the clearances are closed by elements of inert material.

8. Gas laser according to claim 7,
**characterized in that**
the elements are made of ceramics.

9. Gas laser according to any one of the preceding claims,
**characterized in that**
the gas laser (10) has at least one device for accelerating the circulation of the laser gas.

10. Gas laser according to any one of the preceding claims,
**characterized in that**
at least one one- or two-core corona rod (22, 24) is disposed between the high voltage electrode (12) and at least one secondary capacitor (18, 20) or at least one capacitor bank, respectively.

11. Gas laser according to any one of the preceding claims,
**characterized in that**
the gas laser (10) is an excimer laser.

## Revendications

1. Laser à gaz comprenant une électrode haute tension (12) et une électrode de masse (14), l'électrode haute tension (12) et l'éctrode de masse (14) étant agencées de telle manière l'une par rapport à l'autre qu'elles délimitent une fente de déchargement (16), ainsi qu'un moyen de génération d'haute tension comprenant un circuit comportant au moins un condenseur de puissance et au moins un condenseur secondaire (18, 20), le condenseur secondaire (18, 20) étant disposé au droit de l'électrode haute tension (12), à l'intérieur d'une chambre de déchargement (32) remplie de gaz à laser, le condenseur secondaire (18, 20) comportant au moins une face extérieure (28, 28') orientée en direction de l'électrode haute tension (12), de façon qu'au moins une normale de surface de la face extérieure (28, 28') étant orientée vers l'électrode haute tension (12), la face extérieure (28, 28') délimitant au moins une surface de limitation d'un canal d'écoulement (26, 26') du gaz à laser circulant pour ainsi limiter l'écoulement du gaz à laser dans l'espace et le diriger, le gaz à laser traversant transversalement la zone de déchargement,
**caractérisé en ce**
**qu'**au moins la face extérieure (28, 28') du condenseur secondaire (18, 20) est réalisée en un matériau inerte.

2. Laser à gaz selon la revendication 1,
**caractérisé en ce**
**que** plusieurs condenseurs secondaires (18, 20) sont juxtaposés pour constituer une batterie de condenseurs, l'axe de la batterie de condenseurs s'étendant parallèlement à l'axe de l'électrode haute tension (12).

3. Laser à gaz selon la revendication 1 ou 2,
**caractérisé en ce**
**que** deux condenseurs secondaires (18, 20) ou deux batteries de condenseurs sont agencés en direction de l'écoulement du gaz à laser parallèlement à l'électrode haute tension (12), de sorte que l'électrode haute tension (12) se voit interposée entre les faces extérieures (28, 28') des condenseurs secondaires ou des batteries de condenseurs correspondants.

4. Laser à gaz selon l'une des revendications précédentes,
**caractérisé en ce**
**que** le condenseur secondaire (18, 20) est prévu sous forme soit de parallélipède soit de bloc soit sous forme stratifiée.

5. Laser à gaz selon la revendication 1,
**caractérisé en ce**
**que** les faces extérieures (28, 28') se composent de BaTiO₃ ou de SrTiO₃.

6. Laser à gaz selon l'une des revendications précédentes,
**caractérisé en ce**
**qu'**au moins une face du condenseur secondaire (18, 20) opposée à la face extérieure (28, 28') est reliée à un circuit de retour par la masse (30).

7. Laser à gaz selon l'une des revendications précédentes,
**caractérisé en ce**
**qu'**au moins deux condenseurs secondaires sont juxtaposés et espacés l'un par rapport à l'autre dans une batterie de condenseurs (18, 20), de manière à créer des interstices entre les différents condenseurs secondaires, ceux-ci étant obturés par des éléments en matériau inerte.

8. Laser à gaz selon la revendication 7,
**caractérisé en ce**
**que** les éléments sont réalisés en céramique.

9. Laser à gaz selon l'une des revendications précédentes,
**caractérisé en ce**
**que** le laser à gaz (10) comprend au moins un dispositif d'accélération de la circulation du gaz à laser.

10. Laser à gaz selon l'une des revendications précédentes,
**caractérisé en ce**
**qu'**entre l'électrode haute tension (12) et au moins un condenseur secondaire (18, 20) respectivement au moins une batterie de condenseurs, au moins une aiguille couronne à une ou deux âmes (22, 24) est prévue.

11. Laser à gaz selon l'une des revendications précédentes,
**caractérisé en ce**
**que** le laser à gaz (10) est un laser à excimères.
